# EUROPÄISCHE PATENTSCHRIFT

(11) **EP 2 409 078 B1**
(45) Veröffentlichungstag und Bekanntmachung des Hinweises auf die Patenterteilung: **13.04.2016**
(21) Anmeldenummer: 10704535.3
(22) Anmeldetag: 09.02.2010
(51) Int. Cl.: F22B 29/06, F01K 23/10, F22B 21/02, F22B 37/62, F22B 1/18

(54) **Verfahren zur Auslegung eines Durchlaufverdampfers**
Method for designing a continuous evaporator
Procédé de conception d'un évaporateur continu

(30) Priorität: 09.03.2009 DE 102009012321
(43) Veröffentlichungstag der Anmeldung: 25.01.2012
(73) Patentinhaber: Siemens Aktiengesellschaft, 80333 München (DE)
(72) Erfinder: BRÜCKNER, Jan, 91080 Uttenreuth (DE); FRANKE, Joachim, 90403 Nürnberg (DE); SCHLUND, Gerhard, 90425 Nürnberg (DE)
(86) Internationale Anmeldenummer: PCT/EP2010/051534
(87) Internationale Veröffentlichungsnummer: WO 2010/102869

(56) Entgegenhaltungen:
- US-A- 6 019 070
- US-A1- 2007 084 418
- US-B1- 6 189 491

## Beschreibung

Die Erfindung betrifft ein Verfahren zur Auslegung eines Durchlaufverdampfers und einen Durchlaufverdampfer für einen Abhitzedampferzeuger in liegender Bauweise mit einer ersten Verdampferheizfläche, die eine Anzahl von im Wesentlichen vertikal angeordneten, von unten nach oben durchströmten ersten Dampferzeugerrohren umfasst, und einer weiteren, der ersten Verdampferheizfläche strömungsmediumsseitig nachgeschalteten zweiten Verdampferheizfläche, die eine Anzahl von weiteren, im Wesentlichen vertikal angeordneten, von unten nach oben durchströmten zweiten Dampferzeugerrohren umfasst.

Bei einer Gas- und Dampfturbinenanlage wird die im entspannten Arbeitsmittel oder Heizgas aus der Gasturbine enthaltene Wärme zur Erzeugung von Dampf für die Dampfturbine genutzt. Die Wärmeübertragung erfolgt in einem der Gasturbine nachgeschalteten Abhitzedampferzeuger, in dem üblicherweise eine Anzahl von Heizflächen zur Wasservorwärmung, zur Dampferzeugung und zur Dampfüberhitzung angeordnet ist. Die Heizflächen sind in den Wasser-Dampf-Kreislauf der Dampfturbine geschaltet. Der Wasser-Dampf-Kreislauf umfasst üblicherweise mehrere, z. B. drei, Druckstufen, wobei jede Druckstufe eine Verdampferheizfläche aufweisen kann.

Für den der Gasturbine als Abhitzedampferzeuger heizgasseitig nachgeschalteten Dampferzeuger kommen mehrere alternative Auslegungskonzepte, nämlich die Auslegung als Durchlaufdampferzeuger oder die Auslegung als Umlaufdampferzeuger, in Betracht. Bei einem Durchlaufdampferzeuger führt die Beheizung von als Verdampferrohren vorgesehenen Dampferzeugerrohren zu einer Verdampfung des Strömungsmediums in den Dampferzeugerrohren in einem einmaligen Durchlauf. Im Gegensatz dazu wird bei einem Natur- oder Zwangumlaufdampferzeuger das im Umlauf geführte Wasser beim Durchlauf durch die Verdampferrohre nur teilweise verdampft. Das dabei nicht verdampfte Wasser wird nach einer Abtrennung des erzeugten Dampfes für eine weitere Verdampfung denselben Verdampferrohren erneut zugeführt.

Ein Durchlaufdampferzeuger unterliegt im Gegensatz zu einem Natur- oder Zwangumlaufdampferzeuger keiner Druckbegrenzung. Ein hoher Frischdampfdruck begünstigt einen hohen thermischen Wirkungsgrad und somit niedrige CO2-Emissionen eines fossilbeheizten Kraftwerks. Zudem weist ein Durchlaufdampferzeuger im Vergleich zu einem Umlaufdampferzeuger eine einfache Bauweise auf und ist somit mit besonders geringem Aufwand herstellbar. Die Verwendung eines nach dem Durchlaufprinzip ausgelegten Dampferzeugers als Abhitzedampferzeuger einer Gas- und Dampfturbinenanlage ist daher zur Erzielung eines hohen Gesamtwirkungsgrades der Gas- und Dampfturbinenanlage bei einfacher Bauweise besonders günstig.

Ein als Abhitzedampferzeuger ausgelegter Durchlaufdampferzeuger kann grundsätzlich in einer von zwei alternativen Bauformen ausgeführt sein, nämlich in stehender Bauweise oder in liegender Bauweise. Ein Durchlaufdampferzeuger in liegender Bauweise ist dabei für eine Durchströmung des beheizenden Mediums oder Heizgases, beispielsweise des Abgases aus der Gasturbine, in annähernd horizontaler Richtung ausgelegt, wohingegen ein Durchlaufdampferzeuger in stehender Bauweise für eine Durchströmung des beheizenden Mediums in einer annähernd vertikalen Richtung ausgelegt ist.

Ein Durchlaufdampferzeuger in liegender Bauweise ist im Gegensatz zu einem Durchlaufdampferzeuger in stehender Bauweise mit besonders einfachen Mitteln und mit besonders geringem Fertigungs- und Montageaufwand herstellbar. Dabei kann insbesondere in den strömungsmediumsseitig nachgelagerten Dampferzeugerrohren der zweiten Verdampferheizfläche innerhalb jeder einzelnen Rohrreihe eine ungleichmäßige Verteilung des Strömungsmediums auf die Dampferzeugerrohre auftreten, die zu Temperaturschieflagen und durch unterschiedliche thermische Ausdehnung zu mechanischen Spannungen führt. Um Beschädigungen des Abhitzedampferzeugers zu vermeiden, wurden daher bisher beispielsweise Dehnbögen zur Kompensation dieser Spannungen angebracht. Diese Maßnahme kann jedoch bei einem Abhitzedampferzeuger in liegender Bauweise technisch vergleichsweise aufwändig sein.

Verfahren zur Auslegung von Dampferzeugern sind aus der US 6 019 070 A und der US 6 189 491 B1 bekannt. Die US 6 019 070 A zeigt einen Dampferzeuger mit aus Dampferzeugerrohren bestehenden Verdampferheizflächen. Die US 6 189 491 B1 zeigt einen Dampferzeuger mit einer ersten und einer zweiten Verdampferheizfläche mit jeweils einer bestimmten Anzahl von parallelen Dampferzeugerrohren, wobei die einzelnen Rohre einer Verdampferheizfläche unterschiedliche Massenstromdichten aufweisen.

Der Erfindung liegt die Aufgabe zugrunde, ein Verfahren zur Auslegung eines Durchlaufverdampfers sowie einen Durchlaufverdampfer für einen Abhitzedampferzeuger der oben genannten Art anzugeben, welche bei einer besonders hohen Lebensdauer eine besonders einfache Bauweise erlauben.

Bezüglich des Verfahrens wird diese Aufgabe erfindungsgemäß gelöst, indem eine Mindestmassenstromdichte vorgegeben wird und die zweiten Dampferzeugerrohre derart ausgelegt werden, dass die sich im Volllastbetrieb einstellende mittlere Massenstromdichte durch die zweiten Dampferzeugerrohre die vorgegebene Mindestmassenstromdichte nicht unterschreitet.

Die Erfindung geht dabei von der Überlegung aus, dass eine besonders einfache Konstruktion des Abhitzedampferzeugers bzw. der Durchlaufverdampfers durch einen Entfall der bisher üblichen Dehnbögen erreicht werden könnte. Dabei müssen jedoch die durch Temperaturschieflagen in den parallel geschalteten Dampferzeugerrohren jeder einzelnen Rohrreihe verursachten mechanischen Spannungen auf andere Weise reduziert werden. Diese treten insbesondere in der zweiten Verdampferheizfläche auf, die mit Wasser-Dampf-Gemisch beaufschlagt wird. Die Temperaturschieflagen werden dabei durch unterschiedliche Anteile von Wasser und Dampf am strömungsseitigen Eintritt der Einzelrohre einer Rohrreihe und einer daraus resultierenden unterschiedlichen Durchströmung dieser Rohre verursacht. Eine statische Stabilisierung der Strömung und gleichzeitig eine besonders einfache Konstruktion des Abhitzedampferzeugers kann erreicht werden, indem direkt die Parameter der Dampferzeugerrohre der zweiten Verdampferheizfläche modifiziert werden. Dabei ist die Reduzierung der Temperaturschieflagen erreichbar, indem die zweiten Dampferzeugerrohre derart ausgelegt werden, dass die sich im Volllastbetrieb einstellende mittlere Massenstromdichte durch die zweiten Dampferzeugerrohre eine vorgegebene Mindestmassenstromdichte nicht unterschreitet.

Vorteilhafterweise beträgt die vorgegebene Mindestmassenstromdichte dabei 180 kg/m²s. Eine Auslegung der Dampferzeugerrohre zur Erreichung einer derart gewählten Massenstromdichte führt nämlich zu einer besonders guten statischen Stabilisierung der Strömung in jeder einzelnen Rohrreihe der zweiten Verdampferheizfläche und somit zu einem besonders guten Ausgleich der Temperatur in parallel geschalteten Dampferzeugerrohren jeder einzelnen Rohrreihe der zweiten Verdampferheizfläche.

Es wurde erkannt, dass diese unterschiedliche Massenstromdichte in den Rohren durch einen im Vergleich zum geodätischen Druckverlust geringen Reibungsdruckverlust in den Dampferzeugerrohren verursacht wird. Eine Strömung mit hohem Dampfanteil des Strömungsmediums strömt nämlich bei geringem Reibungsdruckverlust vergleichsweise schnell durch einzelne Dampferzeugerrohre, während eine Strömung mit hohem Wasseranteil aufgrund ihres höheren, durch die Masse verursachten geodätischen Druckverlustes benachteiligt ist und zur Stagnation neigen kann. Um die Durchströmungen zu vergleichmäßigen, sollte daher der Reibungsdruckverlust erhöht werden. Dies ist erreichbar, indem der Innendurchmesser der zweiten Dampferzeugerrohre vorteilhafterweise derart gewählt ist, dass die sich im Volllastbetrieb einstellende mittlere Massenstromdichte die vorgegebene Mindestmassenstromdichte nicht unterschreitet.

Die Aufgabe wird weiterhin durch einen nach dem oben genannten Verfahren ausgelegten Durchlaufverdampfer gelöst.

Eine Reduzierung des Innendurchmessers zur Sicherung eines Mindestmassenstroms sollte jedoch nicht beliebig weit erfolgen. Es kann anhand verschiedener Betriebsparametern ein Mindestdurchmesser erwünscht sein. So muss beispielsweise die Oberfläche der Dampferzeugerrohre einen ausreichenden Wärmeeintrag erlauben. In diesem Zusammenhang sind die Dampferzeugerrohre häufig auch außenberippt, was wiederum einen gewissen Mindestdurchmesser erfordert. Auch aus Gründen der Festigkeit und Stabilität ist eine Mindestdicke erforderlich. Nicht zuletzt kann bei zu geringem Innendurchmesser der geodätische Druckverlust des Wasseranteils des Strömungsmediums so gering werden, dass eine Umkehrung des gewünschten Effektes eintritt und eine Strömung mit hohem Wasseranteil zu hohe Geschwindigkeiten in den parallelen Dampferzeugerrohre erreicht. Daher sollte vorteilhafterweise der Innendurchmesser der zweiten Dampferzeugerrohre einen anhand vorgegebener Betriebsparameter ermittelten Mindestdurchmesser nicht unterschreiten.

Vorteilhafterweise beträgt der Innendurchmesser der zweiten Dampferzeugerrohre dabei zwischen 20 mm und 40 mm. Eine Wahl des Innendurchmessers in diesem Bereich bestimmt die Massenstromdichte in den zweiten Dampferzeugerrohren nämlich derart, dass der Reibungsdruckverlust in den Dampferzeugerrohren in einem Bereich liegt, bei dem eine Durchströmung mit höherem Wasseranteil und eine Durchströmung mit höherem Dampfanteil zu Austrittstemperaturen mit vergleichsweise geringen Temperaturunterschieden führen. Somit werden die Temperaturunterschiede innerhalb jeder Rohrreihe der zweiten Verdampferheizfläche minimiert, wobei gleichzeitig die übrigen Betriebserfordernisse erfüllt werden.

In vorteilhafter Ausgestaltung ist eine Anzahl von zweiten Dampferzeugerrohren einander heizgasseitig als Rohrreihen hintereinander geschaltet. Dies ermöglicht es, eine größere Anzahl von parallel geschalteten Dampferzeugerrohren für eine Verdampferheizfläche zu verwenden, was durch die vergrößerte Oberfläche einen besseren Wärmeeintrag bedeutet. Allerdings sind die in Heizgasströmungsrichtung hintereinander angeordneten Dampferzeugerrohre dabei unterschiedlich beheizt. Insbesondere in den heizgaseintrittsseitigen Dampferzeugerrohren wird das Strömungsmedium vergleichsweise stark beheizt. Durch die beschriebene Auslegung der Dampferzeugerrohre derart, dass eine Mindestmassenstromdichte für Volllast nicht unterschritten wird, kann jedoch auch in diesen Dampferzeugerrohren eine der Beheizung angepasste Durchströmung erreicht werden. Dadurch wird bei einfacher Konstruktion eine besonders lange Lebensdauer des Abhitzedampferzeugers erreicht.

In vorteilhafter Ausgestaltung ist die erste Verdampferheizfläche der zweiten Verdampferheizfläche heizgasseitig nachgeschaltet. Dies bietet den Vorteil, dass die zweite, strömungsmediumsseitig nachgeschaltete und somit zur weiteren Erhitzung bereits verdampften Strömungsmediums ausgelegte Verdampferheizfläche auch in einem vergleichsweise stärker beheizten Bereich des Heizgaskanals liegt.

Zweckmäßigerweise kommt ein derartiger Durchlaufverdampfer in einem Abhitzedampferzeuger zum Einsatz und es wird der Abhitzedampferzeuger in einer Gas- und Dampfturbinenanlage verwendet. Dabei ist der Dampferzeuger vorteilhafterweise heizgasseitig einer Gasturbine nachgeschaltet. Bei dieser Schaltung kann zweckmäßigerweise hinter der Gasturbine eine Zusatzfeuerung zur Erhöhung der Heizgastemperatur angeordnet sein.

Die mit der Erfindung erzielten Vorteile bestehen insbesondere darin, dass durch die Auslegung der zweiten Dampferzeugerrohre derart, dass die sich im Volllastbetrieb einstellende mittlere Massenstromdichte durch die zweiten Dampferzeugerrohre eine vorgegebene Mindestmassenstromdichte nicht unterschreitet, eine statische Stabilisierung der Strömung und somit eine Reduzierung der Temperaturdifferenzen zwischen parallel geschalteten Dampferzeugerrohren und der daraus resultierenden mechanischen Spannungen erreicht wird. Dadurch ist die Lebensdauer des Abhitzedampferzeugers besonders hoch. Durch die entsprechende Auslegung der Dampferzeugerrohre können weitere, aufwändige technische Maßnahmen wie Dehnbögen entfallen und es wird so gleichzeitig eine besonders einfache, kostensparende Konstruktion des Abhitzedampferzeugers bzw. eines Gas- und Dampfturbinenkraftwerks ermöglicht.

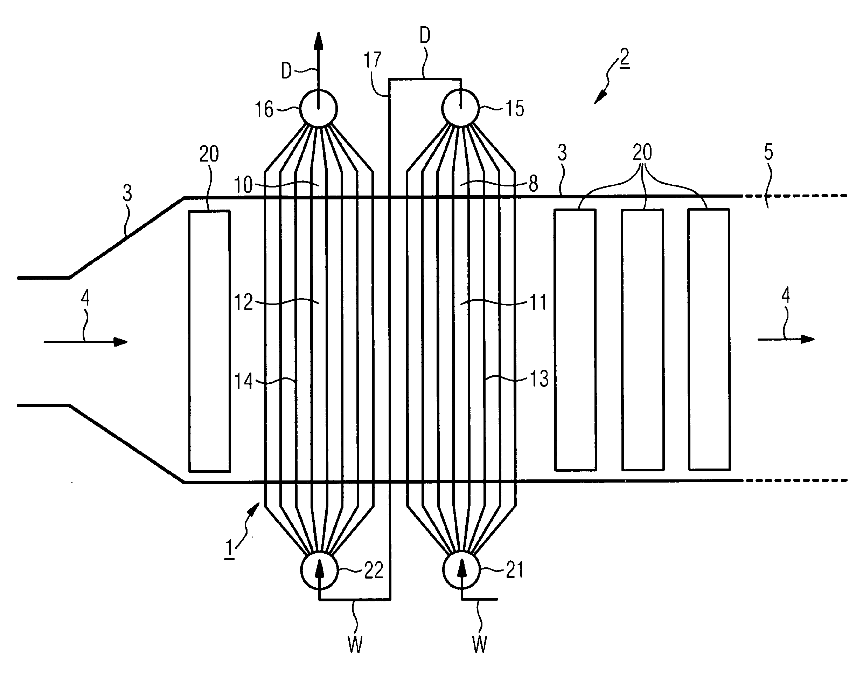

Ein Ausführungsbeispiel der Erfindung wird anhand einer Zeichnung näher erläutert. Darin zeigt die Figur in vereinfachter Darstellung im Längsschnitt einen Dampferzeuger in liegender Bauweise.

Der Durchlaufverdampfer 1 für den Abhitzedampferzeuger 2 gemäß der FIG ist einer nicht näher dargestellten Gasturbine abgasseitig nachgeschaltet. Der Abhitzedampferzeuger 2 weist eine Umfassungswand 3 auf, die einen in einer annähernd horizontalen, durch die Pfeile 4 angedeuteten Heizgasrichtung durchströmbaren Heizgaskanal 5 für das Abgas aus der Gasturbine bildet. Im Heizgaskanal 5 ist eine Anzahl von nach dem Durchlaufprinzip ausgelegten Verdampferheizflächen 8, 10 angeordnet. Im Ausführungsbeispiel gemäß der FIG sind jeweils zwei Verdampferheizflächen 8, 10 gezeigt, es kann aber auch eine größere Anzahl von Verdampferheizflächen vorgesehen sein.

Die Verdampferheizflächen 8, 10 gemäß der FIG umfassen jeweils in der Art eines Rohrbündels eine Anzahl von in Heizgasrichtung hintereinander angeordneten Rohrreihen 11 bzw. 12. Jede Rohrreihe 11, 12 wiederum umfasst jeweils eine Anzahl von in Heizgasrichtung nebeneinander angeordneten Dampferzeugerrohren 13 bzw. 14, von denen für jede Rohrreihe 11, 12 nur jeweils eines sichtbar ist. Die annähernd vertikal angeordneten, zur Durchströmung eines Strömungsmediums W parallel geschalteten ersten Dampferzeugerrohre 13 der ersten Verdampferheizfläche 8 sind dabei ausgangsseitig an einen ihnen gemeinsamen Austrittssammler 15 angeschlossen. Die ebenfalls annähernd vertikal angeordneten, zur Durchströmung eines Strömungsmediums W parallel geschalteten zweiten Dampferzeugerrohre 14 der zweiten Verdampferheizfläche 10 sind ebenso ausgangsseitig an einen ihnen gemeinsamen Austrittssammler 16 angeschlossen. Es kann dabei auch bei beiden Verdampferheizflächen 8, 10 ein vergleichsweise aufwändigeres Sammlersystem vorgesehen sein. Die Dampferzeugerrohre 14 der zweiten Verdampferheizfläche 10 sind den Dampferzeugerrohren 13 der ersten Verdampferheizfläche 8 strömungstechnisch über ein Fallrohrsystem 17 nachgeschaltet.

Das aus den Verdampferheizflächen 8, 10 gebildete Verdampfersystem ist mit dem Strömungsmedium W beaufschlagbar, das bei einmaligem Durchlauf durch das Verdampfersystem verdampft und nach dem Austritt aus der zweiten Verdampferheizfläche 10 als Dampf D abgeführt wird. Das aus den Verdampferheizflächen 8, 10 gebildete Verdampfersystem ist in den nicht näher dargestellten Wasser-Dampf-Kreislauf einer Dampfturbine geschaltet. Zusätzlich zu dem die Verdampferheizflächen 8, 10 umfassenden Verdampfersystem sind in den Wasser-Dampf-Kreislauf der Dampfturbine eine Anzahl weitere, in der FIG schematisch angedeutete Heizflächen 20 geschaltet. Bei den Heizflächen 20 kann es sich beispielsweise um Überhitzer, um Mitteldruckverdampfer, um Niederdruckverdampfer und/oder um Vorwärmer handeln.

Die zweiten Dampferzeugerrohre 14 sind nun derart ausgelegt, dass eine bei Volllast vorgegebene Mindestmassenstromdichte von 180 kg/m²s nicht unterschritten wird. Dabei beträgt ihr Innendurchmesser zwischen 20 mm und 40 mm, so dass einerseits erforderliche Betriebsparameter wie Festigkeit, Wärmeeintrag etc. erfüllt werden, andererseits Temperaturschieflagen innerhalb einer Rohrreihe der zweiten Verdampferheizfläche 10 minimiert werden. Dadurch wird die mechanische Spannungsbelastung des Abhitzedampferzeugers 2 reduziert und es ist eine besonders lange Lebensdauer bei gleichzeitig einfacher Bauweise durch Entfall der bisher üblichen Dehnbögen gewährleistet.

## Patentansprüche

1. Verfahren zur Auslegung eines Durchlaufverdampfers (1) für einen Abhitzedampferzeuger (2) in liegender Bauweise mit einer ersten Verdampferheizfläche (8), die eine Anzahl von im Wesentlichen vertikal angeordneten, von unten nach oben durchströmten ersten Dampferzeugerrohren (13) umfasst, und einer weiteren, der ersten Verdampferheizfläche (8) strömungsmediumsseitig nachgeschalteten zweiten Verdampferheizfläche (10), die eine Anzahl von weiteren, im Wesentlichen vertikal angeordneten, von unten nach oben durchströmten zweiten Dampferzeugerrohren (14) umfasst, wobei eine Mindestmassenstromdichte vorgegeben wird und die zweiten Dampferzeugerrohre (14) derart ausgelegt werden, dass die sich im Volllastbetrieb einstellende mittlere Massenstromdichte in den zweiten Dampferzeugerrohren (14) die vorgegebene Mindestmassenstromdichte nicht unterschreitet.

2. Verfahren nach Anspruch 1, bei dem die vorgegebene Mindestmassenstromdichte 180 kg/m²s beträgt.

3. Verfahren nach Anspruch 1 oder 2, bei dem der Innendurchmesser der zweiten Dampferzeugerrohre (14) derart gewählt wird, dass die sich im Volllastbetrieb einstellende mittlere Massenstromdichte in den zweiten Dampferzeugerrohren (14) die vorgegebene Mindestmassenstromdichte nicht unterschreitet.

4. Durchlaufverdampfer (1), ausgelegt nach dem Verfahren nach einem der Ansprüche 1 bis 3.

5. Durchlaufverdampfer (1) nach Anspruch 4, bei dem der Innendurchmesser der zweiten Dampferzeugerrohre (14) einen anhand vorgegebener Betriebsparameter ermittelten Mindestdurchmesser nicht unterschreitet.

6. Durchlaufverdampfer (1) nach Anspruch 4 oder 5, bei dem der Innendurchmesser der zweiten Dampferzeugerrohre (14) zwischen 20 und 40 mm beträgt.

7. Durchlaufverdampfer (1) nach einem der Ansprüche 4 bis 6, bei dem eine Anzahl von zweiten Dampferzeugerrohren (14) einander heizgasseitig als Rohrreihen (11) hintereinander geschaltet sind.

8. Durchlaufverdampfer (1) nach einem der Ansprüche 4 bis 7, bei dem die erste Verdampferheizfläche (8) der zweiten Verdampferheizfläche (10) heizgasseitig nachgeschaltet ist.

9. Abhitzedampferzeuger (2) mit einem Durchlaufverdampfer (1) nach einem der Ansprüche 1 bis 8.

10. Abhitzedampferzeuger (2) nach Anspruch 9, dem heizgasseitig eine Gasturbine vorgeschaltet ist.

## Claims

1. Method for designing a once-through evaporator (1) for a horizontally constructed waste heat steam generator (2) with a first evaporator heating surface (8) which incorporates a number of first steam generation tubes (13), the arrangement of which is essentially vertical and through which the flow is from the bottom to the top, and another second evaporator heating surface (10), which on the flow substance side is connected downstream from the first evaporator heating surface (8), which incorporates a further number of second steam generation tubes (14) the arrangement of which is essentially vertical and through which the flow is from the bottom to the top, wherein a minimum mass flow density is prescribed and the second steam generation tubes (14) are designed in such a way that the mean mass flow density which is established in the second steam generation tubes (14) when operating at full load does not fall below the prescribed minimum mass flow density.

2. Method according to claim 1, in which the value of the prescribed minimum mass flow density is 180 kg/m²s.

3. Method according to claim 1 or 2, in which the internal diameter of the second steam generation tubes (14) is chosen such that the mean mass flow density which is established in the second steam generation tubes (14) when operating at full load does not fall below the prescribed minimum mass flow density.

4. Once-through evaporator (1) designed in accordance with the method according to one of claims 1 to 3.

5. Once-through evaporator (1) according to claim 4, in which the internal diameter of the second steam generation tubes (14) is not less than a minimum diameter determined on the basis of prescribed operating parameters.

6. Once-through evaporator (1) according to claim 4 or 5, in which the internal diameter of the second steam generation tubes (14) has a value between 20 and 40 mm.

7. Once-through evaporator (1) according to one of claims 4 to 6, in which a number of second steam generation tubes (14) are connected one after another on the heating gas side as rows of tubes (11).

8. Once-through evaporator (1) according to one of claims 4 to 7, in which the first evaporator heating surface (8) is connected downstream from the second evaporator heating surface (10) on the heating gas side.

9. Waste heat steam generator (2) with a once-through evaporator (1) according to one of claims 1 to 8.

10. Waste heat steam generator (2) according to claim 9, upstream from which on the hot gas side is connected a gas turbine.

## Revendications

1. Procédé de conception d'un évaporateur ( 1 ) à passage continu pour un générateur ( 2 ) de vapeur à récupération de la chaleur perdue en mode horizontal ayant une première surface ( 8 ) de chauffe d'évaporateur, qui comprend un certain nombre de premiers tubes ( 13 ) de générateur de vapeur, disposés sensiblement verticalement et parcourus de bas en haut, et une autre deuxième surface ( 10 ) de chauffe d'évaporateur, qui est montée en aval du côté du fluide en écoulement de la première surface ( 8 ) de chauffe d'évaporateur et qui comprend un certain nombre de deuxièmes tubes ( 14 ) de générateur de vapeur, disposés sensiblement verticalement et parcourus de bas en haut, une densité de courant massique minimum étant donnée à l'avance et les deuxièmes tubes ( 14 ) de générateur de vapeur étant conçus de manière à ce que la densité de courant massique moyenne, s'établissant en fonctionnement à pleine charge dans les deuxièmes tubes ( 14 ) de générateur de vapeur, ne devienne pas inférieure à la densité du courant massique minimum donnée à l'avance.

2. Procédé suivant la revendication 1, **caractérisé en ce que** la densité de courant massique minimum donnée à l'avance est de 180 kg/m²s.

3. Procédé suivant la revendication 1 ou 2, dans lequel on choisit le diamètre intérieur des deuxièmes tubes ( 14 ) de générateur de vapeur de manière à ce que la densité du courant massique moyenne, s'établissant en fonctionnement en pleine charge dans les deuxièmes tubes ( 14 ) de générateur de vapeur, ne devienne pas inférieure à la densité de courant massique minimum donnée à l'avance.

4. Evaporateur ( 1 ) à passage continu conçu selon le procédé suivant l'une des revendications 1 à 3.

5. Evaporateur ( 1 ) à passage continu suivant la revendication 4, dans lequel le diamètre intérieur des deuxièmes tubes ( 14 ) de générateur de vapeur ne devient pas inférieur à un diamètre minimum déterminé à l'aide de paramètres de fonctionnement donnés à l'avance.

6. Evaporateur ( 1 ) à passage continu suivant la revendication 4 ou 5, dans lequel le diamètre intérieur des deuxièmes tubes ( 14 ) de générateur de vapeur est compris entre 20 et 40 mm.

7. Evaporateur ( 1 ) à passage continu suivant l'une des revendications 4 à 6, dans lequel un certain nombre de tubes ( 14 ) de générateur de vapeur sont montés les uns derrière les autres du côté du gaz chaud sous la forme de rangées ( 11 ) de tubes.

8. Evaporateur ( 1 ) à passage continu suivant l'une des revendications 4 à 7, dans lequel la première surface ( 8 ) de chauffe d'évaporateur est montée en aval du côté du gaz chaud de la deuxième surface ( 10 ) de chauffe d'évaporateur.

9. Générateur ( 2 ) de vapeur à récupération de la chaleur perdue, ayant un évaporateur ( 1 ) à passage continu suivant l'une des revendications 1 à 8.

10. Générateur ( 2 ) de vapeur à récupération de la chaleur perdue suivant la revendication 9, en amont duquel, du côté du gaz chaud, est montée une turbine à gaz.
